# EUROPEAN PATENT APPLICATION

(11) **EP 4 806 827 A1**
(43) Date of publication of application: **16.09.2026**
(21) Application number: 25163664.3
(22) Date of filing: 13.03.2025
(51) Int. Cl.: B66C 13/12, B66C 23/44, B66F 11/04, B60R 16/023, H05K 7/02

(54) **A WIRING SYSTEM FOR A PLATFORM MOUNTABLE LIFTING DEVICE, LIFTING DEVICE, AND CONNECTOR BOX**

(71) Applicant: Palfinger AG, 5101 Bergheim bei Salzburg (AT)
(72) Inventor: SCHINWALD, Martin, 5203 Köstendorf-Salzburg (DE)
(74) Representative: 2SPL Patentanwälte PartG mbB

(57) **Abstract**

A wiring system (150) for a platform mountable lifting device comprises a first connector box (200) comprising multiple periphery connectors (202a-p) to attach components relating to the lifting device; a second connector box (300) comprising multiple periphery connectors (302a-o) to attach components relating to the platform and an interconnect (400) between the first connector box (200) and the second connector box (300).

## Description

### Field

The present disclosure relates to wiring systems for a platform mountable lifting device and an associated architecture.

### Background

The present disclosure relates to the field of mechatronic systems for lifting devices such as for example for loader cranes, specifically to the design and implementation of modular wiring architectures in lifting devices. In this technical field, loader cranes require complex electrical assemblies to integrate various sensors, actuators, control units, and other components, and the evolution of these systems has led to a proliferation of electrical kits and wiring configurations. Conventional electrical assembly kits that are custom designed for specific crane models, where the multiplicity of products, numerous component variants, and disparate wiring solutions contribute to significant internal complexity. This complexity not only results in increased maintenance efforts, longer process times, and elevated logistical costs, but it also creates quality issues and higher overall costs. Consequently, a technical problem arises in the need to substantially reduce the inherent complexity of mechatronic architectures in loader cranes while maintaining technical functionality and facilitating efficient maintenance and future developments.

### Summary

According to a first aspect of the present disclosure, it is proposed a wiring system for a platform-mountable lifting device, wherein a first connector box comprises multiple periphery connectors to attach components relating to the lifting device, a second connector box comprises multiple periphery connectors to attach components relating to the platform, and an interconnect is provided between the first connector box and the second connector box. This wiring system is configured to at least partially segregate the connections associated with the lifting device from those associated with the platform, thereby facilitating simpler assembly and maintenance while ensuring a distinct separation of functionalities. A further benefit of employing connector boxes, e.g. as an interface between the electronic control unit (ECU) and various system components is observed during assembly and subsequent modifications.

By utilizing standardized connector boxes, the system simplifies the integration of the ECU with the associated sensors, actuators, and other critical components. This modularity not only streamlines the assembly process but also facilitates the supplementation or upgrading of existing cranes, as new components can be integrated with minimal disruption to the overall architecture. The resulting configuration enhances maintainability and supports flexible adaptations to evolving technical requirements.

According to some embodiments, the wiring system may include an interconnect that comprises either a slip ring assembly configured to transfer signals between the first connector box and the second connector box, or a cable configured to couple the first connector box to the second connector box. In this embodiment, the use of a slip ring assembly or a cable allows for reliable signal transfer between the connector boxes, ensuring uninterrupted communication and functionality even when rotational or positional movement is present in the lifting device.

According to some embodiments, the wiring system may further include a first connector box that comprises a first universal connector configured to connect to the second connector box, and a second connector box that comprises a second universal connector configured to connect to the first connector box. This configuration may ensure that both connector boxes can be interconnected through standardized universal connectors, thereby simplifying the assembly process and reducing the variability in component selection.

According to some embodiments, the wiring system is configured such that signal pins of the first universal connector are routed to corresponding signal pins of the periphery connectors within the first connector box. This arrangement enables that signal paths are managed and aligned with the periphery connectors such that signals of periphery connected to the periphery connectors of the first connector box can be transferred to the second connector box via the first universal connector so as to guarantee the modularity of the system while routing all required signals to a ECU that may, for example be connected to the second connector box.

According to some embodiments, the wiring system is designed so that the periphery connectors of the first connector box are provided with mutually different shapes, markings, or colors, and similarly, the periphery connectors of the second connector box are provided with mutually different shapes, markings, or colors. This distinctive design facilitates quick and accurate identification of connector types during assembly or maintenance, thereby reducing the risk of erroneous connections and streamlining the diagnostic process.

According to some embodiments, the components connected to the wiring system comprise at least one of an actuator or a sensor. By including such components, the wiring system is adapted to support the integration of critical operational elements, which can enhance the responsiveness and functionality of the lifting device during various operational scenarios.

According to some embodiments, the wiring system may further comprise a third connector box coupled to at least one of the first connector box or the second connector box, wherein the third connector box is configured for connection to a control unit (ECU). The inclusion of a third connector box extends the wiring system's versatility by allowing for an integrated control unit connection, which can improve system monitoring and control while enabling efficient management of operational parameters.

According to some embodiments, a lifting device mounted on a platform may incorporate the wiring system as described in any of the preceding aspects, where said lifting device assembly comprises components connected to the first connector box and the platform comprises components connected to the second connector box. This configuration integrates the wiring system into the overall lifting device structure, thereby enhancing the modularity and serviceability of the device in practical applications.

According to some embodiments, the lifting device as described may be configured such that the platform is a truck. This specific embodiment emphasizes the adaptability of the wiring system to vehicular platforms, thereby expanding its applicability in mobile lifting solutions while ensuring robust connectivity and performance under dynamic operational conditions.

According to some embodiments, a connector box for a wiring system for a lifting device may be provided, the connector box comprising multiple periphery connectors configured to attach components relating to the lifting device or to a platform for the lifting device, and a universal connector configured to connect to a further connector box, wherein signal pins of the universal connector are routed to signal pins of the periphery connectors within the connector box. This connector box is designed to serve as a central interfacing unit, enhancing the ease of integration with other system components while maintaining organized signal routing.

According to some embodiments, the connector box as described may further comprise periphery connectors that have mutually different shapes, markings, or colors. This embodiment improves the ease of identification and connection of various system components, thereby reducing potential errors during system assembly or service interventions.

According to some embodiments, the connector box may further include an extension connector configured to provide at least power for a further connector box. The provision of an extension connector facilitates the distribution of power across additional modules, thereby extending the functionality of the wiring system without compromising its modular design.

According to some embodiments, the connector box may additionally comprise at least one of a fuse, a backup battery, or a diagnosis port. The inclusion of these elements provides enhanced protection and diagnostic capabilities, thereby contributing to a more robust and maintainable system in demanding operational environments.

According to some embodiments, the connector box may further comprise a connector configured to connect to a mobile platform. By incorporating a connector for mobile platforms, the connector box is tailored for applications where mobility is essential, thus enhancing its versatility in various mobile lifting scenarios.

### Brief description of the Figures

Some examples of apparatuses and/or methods will be described in the following by way of example only, and with reference to the accompanying figures, in which
Fig. 1 illustrates an example of a wiring system;
Fig. 2 illustrates an example of a connector box of the wiring system illustrated in fig. 1;
Fig. 3 illustrates an example of a lifting device that may use a wiring system according to figs. 1 and 2;
Fig. 4 illustrates an example of a lifting device mounted on a truck; and
Fig. 5 illustrates an example of a controller for a lifting device.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

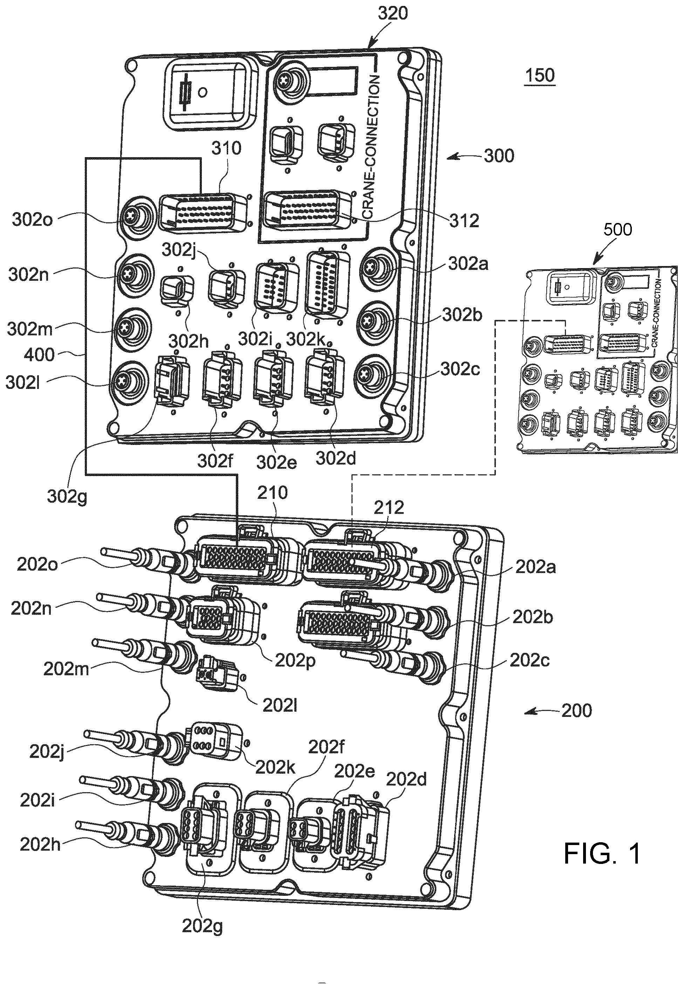

Fig. 1 illustrates an example of a wiring system 150 for a lifting device.

The wiring system comprises a first connector box 200 and a second connector box 300 that are coupled by an interconnect of arbitrary type.

The first connector box 200 exhibits multiple periphery connectors 202a - 202p to attach components relating to the lifting device and the second connector box 300 comprising multiple periphery connectors 302a - 302o to attach components relating to the platform.

A connector box 200, 300 is generally conceived as a device that serves as an interface within a system, facilitating connections among various components. In some embodiments, this concept is broadly defined without limiting the design to any single configuration or functionality, thus allowing for various implementations to achieve interconnection. In some implementations, the connector box may be viewed as an enclosure that organizes multiple connection points for electrical or signal interfaces. For example, it is often designed to offer a convenient and reliable means for linking different parts of a system, and in certain cases it might include features that support diagnostic functions or provide environmental protection. This description is intended to illustrate one aspect of its role in system integration rather than prescribe a specific design. At a more specific level, one embodiment of a connector box could involve an enclosure constructed from materials such as metal or high-grade polymer, which might incorporate features like weatherproof sealing, designated areas for circuit boards, and integrated fuse holders. For example, it may include various port interfaces for accommodating different plug types and may be configured to support diagnostic testing and maintenance, while potentially incorporating internal wiring arrangements and thermal management elements to promote stable performance. This detailed example is provided merely as one possible implementation and is not meant to restrict the invention to these features or configurations.

A periphery connector can be understood as an interface element that establishes communication or signal pathways between a central system and external devices or modules. It is conceived in broad terms to extend the functionality of a system by enabling connections at its outer boundaries without committing to any specific implementation. This concept may be viewed as a connector located at the outer edge of a device, facilitating the linkage between internal circuitry and external peripherals. For example, it is often designed to support the transmission of electrical signals, data, or power, thereby enhancing the interoperability of the system with other equipment. Such a connector can serve as a gateway for diagnostics, control, or communication functions while maintaining system integrity. In one possible embodiment, a periphery connector might involve a robust, molded housing fabricated from durable materials that provide both environmental protection and reliable electrical contact. That could mean it incorporates defined pin or socket configurations, shielding elements to reduce electromagnetic interference, and locking mechanisms to secure the connection. Additionally, the connector may be designed with specific alignment features and modular elements that facilitate easy replacement or upgrade, ensuring that the interface remains versatile and adaptable to a range of peripheral devices.

Interconnect is understood as a means by which distinct components within a system are joined together to facilitate the exchange of signals, data, or power, thereby enabling the system to function as an integrated whole. This concept embodies the idea of establishing pathways that allow various elements to work in concert, enhancing overall system coherence without specifying any particular method or structure. This notion can be further expanded to include the design and implementation of conduits that permit different devices or subsystems to communicate effectively. For example, interconnect may involve the use of connectors, wiring, or even wireless links that provide the necessary channels for interaction. Such a system not only supports data or signal transmission but may also offer features for error checking and signal conditioning, thereby ensuring that the integrated components operate reliably within their intended environment. In one possible embodiment, an interconnect might consist of a precisely arranged network of physical elements such as conductive traces, cables, or optical fibers, each engineered with specific material properties to optimize performance. That could mean the incorporation of contact pads, connectors with defined geometries, and shielding elements to minimize interference and signal degradation. In this detailed configuration, the interconnect is designed to meet stringent performance criteria, ensuring that electrical characteristics such as impedance and bandwidth are maintained within predetermined limits to support the seamless transfer of information between interconnected devices. According to some implementations, the interconnect comprises a slip ring assembly allowing for reliable signal transfer between the connector boxes even when rotational or positional movement between the lifting device and its platform is feasible.

The first connector box, which comprises multiple periphery connectors associated with the lifting device, provides the advantage of enhanced connectivity and flexibility in interfacing various lifting-related subsystems. This design facilitates the integration of diverse sensors, actuators, and control units that are critical for the safe and efficient operation of the lifting device, enabling easier maintenance and upgradeability as individual connectors can be accessed or replaced without disturbing the overall system. According to one embodiment, a predominant portion of these periphery connectors, for instance around 70% to 80%, are dedicated to functions specifically related to the lifting device, while the remaining connectors may serve additional purposes or support shared functions.

Similarly, the second connector box, which includes multiple periphery connectors associated with the platform, is advantageous in that it allows for extensive integration of platform-specific components such as power distribution modules, communication interfaces, and diagnostic tools. This arrangement not only enhances overall performance and resilience of the platform subsystem but also contributes to a modular design that simplifies system assembly and troubleshooting. In one embodiment, the majority of periphery connectors in this box-again, for example, approximately 70% to 80%-are predominantly focused on platform-related functions, while a minority may be allocated to support auxiliary or overlapping functions.

It is important to note that although the predominant share of periphery connectors in each connector box may be allocated to either the lifting device or the platform, not all connectors need to be exclusively dedicated to one of those targets. Some connectors may be shared or repurposed to support functions spanning both the lifting device and the platform or to accommodate additional peripheral devices. This versatile configuration provides significant flexibility in system configuration and scalability, allowing the solution to adapt to evolving requirements or incorporate new functionalities without necessitating major redesigns.

Many of the periphery connectors of the first connector box have mutually different shapes. Likewise, many of the periphery connectors of the second connector box have mutually different shapes. The periphery connectors do not share a uniform shape, which allows each connector to be distinctly identified and connected to its corresponding interface. This design choice enables the system to ensure proper mating between components and minimizes the risk of incorrect connections, thereby promoting overall system reliability. Further, different shapes of periphery connectors can facilitate unique coupling characteristics for various signals or power inputs. That could mean one connector is shaped in a manner that suits highfrequency signal transmission, while another may be designed for power delivery, allowing each connector to inherently guide its associated cable or plug toward the correct port. The periphery connectors might be implemented with diverse geometric profiles, such as circular, rectangular, or keyed shapes, to ensure proper alignment and secure connections with the intended mating connectors. This variation in connector shape is provided merely as one possible means of distinguishing the functions of individual connectors and is not meant to limit the scope of the invention to any configuration. Amongst those periphery connectors not distinguishing from one another by their shape, different periphery connectors can be marked with different symbols or with different colors to avoid being connected to the wrong component.

Each of the connector boxes 200 and 300 comprises at least one universal connector 210 and 310 to connect to the other connector box.

As illustrated in fig. 1, the first connector box 200 comprises an additional universal connector 212 to connect to an optional third connector box 500 to extend the system flexibility. Connector box 300 also comprises an additional universal connector 312 that could alternatively or additionally be used to extend the system.

In most implementations, the actors and sensors connected to the connector boxes communicate with and are controlled by an electronic control unit (ECU) or control unit. The ECU functions as the central command center, gathering input from various sensors and issuing control signals to different actuators to ensure the proper operation of the overall system. The connector boxes serve as an intermediary between the ECU and these peripheral components, providing the necessary pathways for reliable and efficient data and power transfer. The connector boxes are designed to facilitate robust communication links between the sensors, actuators, and the ECU, ensuring that each component receives the correct signals and power levels needed for optimal performance. They contribute not only to the physical connectivity but also to the overall organization of the system by segregating different signal types and protecting critical connections from environmental interference. This structured interconnection improves both system diagnostics and maintenance, as well as overall operational reliability. There are several ways in which the ECU can interface with one of these connector boxes. For example, the ECU might utilize standardized communication protocols such as Controller Area Network (CAN) bus, Local Interconnect Network (LIN), or Ethernet to exchange data with the components connected via the connector boxes. Alternatively, the ECU may connect through dedicated wiring harnesses that include integrated signal conditioning or filtering elements, ensuring high-fidelity transmission of both control signals and sensor data. Such interface options provide versatility and adaptability, enabling the system to accommodate a variety of operational requirements without compromising on performance or ease of integration. According to some implementations, the signal wires of the sensors and actors are forwarded to the ECU. For this purpose, signal pins of the first connector can be routed to signal pins of the periphery connectors within the connector boxes to forward the signals from actuators or sensors via the two connector boxes to an ECU.

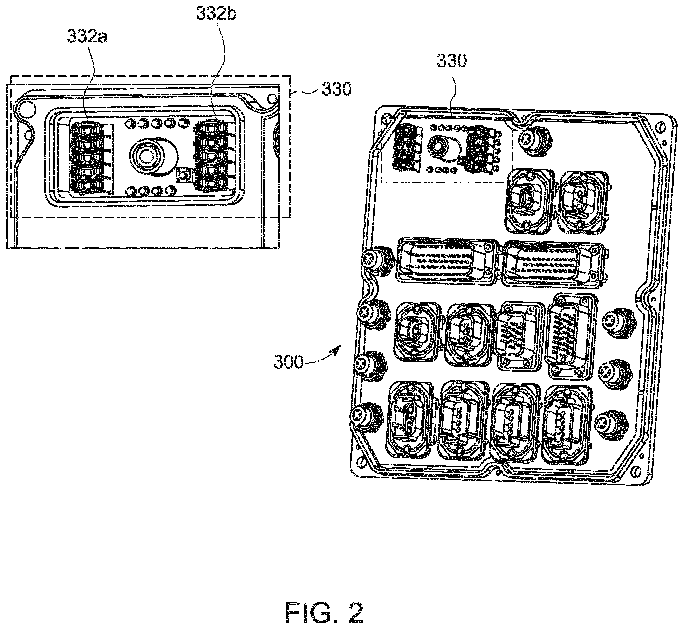

Fig. 2 illustrates connector box 300 of the wiring system illustrated in fig. 1 in a partially exploded view to visualize optional elements of the connector box 300 not visible from the outer view. The following description will focus on said additional elements.

The connector box 300 further comprises multiple fuses 332a and 332b. Optionally, the connector box 300 may further comprise a backup battery, a diagnosis port, one or more jumpers or an arbitrary combination of said components. In further embodiments, those components may be arbitrarily distributed on one connector box, e.g. under different covers on one side of the connector box or even on different sides of the connector box. Also, the different components can be arbitrarily distributed between the two connector boxes 200 and 300.

Incorporating fuses within connector box 300, rather than positioning them close to an ECU can offers significant advantages in terms of localized protection. By situating fuses such as 332a and 332b within the connector box, overcurrent and fault conditions can be managed at the point where the power is distributed to the sensors and actuators. This localized protection helps to isolate faults before they propagate further into the system, thereby safeguarding the wiring and connected components and reducing the risk of damage to the ECU itself. Integrating a diagnosis port into the connector box also enhances the system's serviceability and fault diagnosis capabilities. With the diagnosis port located in the connector box, technicians can readily access and test the health of the interconnections without the need to disturb the more complex circuitry associated with the ECU. This can streamline maintenance procedures, allowing for quicker isolation and resolution of issues at the interface where they are most likely to occur. Moreover, this distributed arrangement contributes to a more modular and adaptable system design. By embedding these protective and diagnostic elements within the connector box, the overall wiring complexity is reduced, and the system benefits from shorter, more direct paths for both power and data transmission. This design choice not only improves reliability and fault tolerance but also offers flexibility in upgrading or reconfiguring the system without necessitating extensive changes to the centralized ECU area. Similar benefits arise from placing a backup battery in a connector box.

A lifting device may, for example, be a crane (e.g. a loader crane) or an elevating work platform (e.g. a crane with a lifting platform). The lifting device may be a knuckle boom crane or a stiff boom crane. Cranes having only one boom may also be called stiff boom cranes since they do not exhibit multiple booms that can change their orientation with respect to each other. In the event of cranes having multiple booms, a knuckle can be used to connect the different booms to one another to enable them to change their relative orientation, by bending about an axis defined by the knuckle. Cranes having at least two booms connected by a knuckle or hinge offer an additional degree of freedom as compared to stiff boom cranes and may be called knuckle-boom cranes. The booms can be connected by hydraulic cylinders across the knuckle to cause the rotation.

The lifting device may have a crane arm system (e.g. also called crane arm or boom) with arms (e.g. also called crane arm segments) with a variable geometry, whereby the arms of the crane arm system can be moved in relation to each other by at least one actuator in the direction of at least one degree of freedom.

The movements of a degree of freedom can be performed by an actuator corresponding to the degree of freedom. For example, two arms that are pivotably mounted to each other can be pivoted relative to each other by an actuator. Two arms mounted so that they can be translationally moved relative to each other can, for example, be translationally moved relative to each other by an actuator.

The lifting device can be moved by control of actuators by issuing operating commands by an operator or user, preferably via a suitable user interface (e.g. a remote control). For example, individual actuators of the lifting device can be specifically controlled by corresponding control commands on the basis of operating commands from an operator.

The degrees of freedom of the crane arm system can basically comprise angles of arms of the crane arm system to each other or with respect to a horizontal or vertical axis and lengths of arms that can be changed in length. The actuators can be implemented by hydraulic cylinders or electric drives.

Control commands can generally be issued by the control system in the form of control signals, which may contain control pulses with an amplitude and a pulse duration, whereby control pulses can be used, for example, to switch electric drives and/or control valves for the hydraulic supply of actuators of the lifting device.

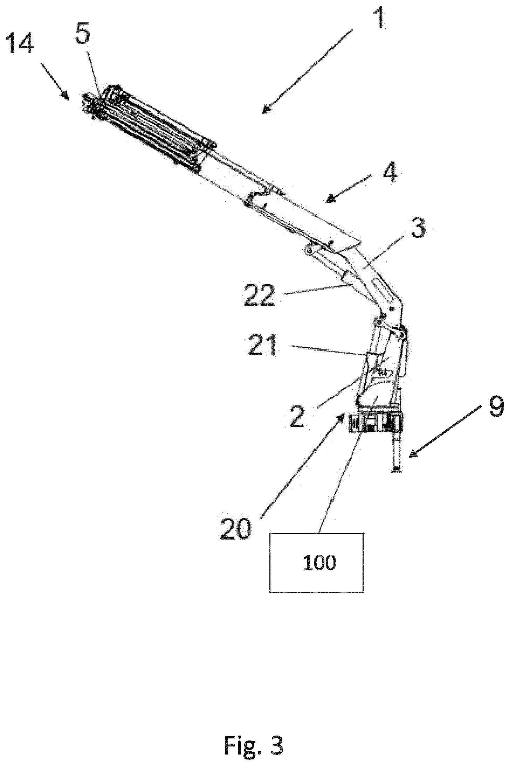

Fig. 3 shows an example of a crane arm of a lifting device. The lifting device 1 may be a knuckle boom crane. The crane arm (e.g. also called crane arm system or boom) of the lifting device 1 comprises a crane column 2 rotatable (or slewable) about a vertical axis, for example, by means of a slewing mechanism (e.g. using a slewing drive motor). Further, the crane arm of the lifting device 1 comprises a main arm segment 3 (e.g. also called main arm, main boom or lifting arm) mounted on the crane column 2 so that the main arm segment 3 is pivotable about a first horizontal pivot axis. Additionally, the crane arm comprises an articulated arm segment 4 (e.g. also called articulated arm, outer boom, knuckle-boom, crane arm extension or knuckle arm) mounted on the main arm segment 3 so that the articulated arm segment 4 is pivotable about a second horizontal pivot axis. The articulated arm segment 4 comprises at least one thrust arm segment 5 (e.g. also called thrust arm, telescopic extension arm, extension arm or extension boom) for changing a length of the articulated arm segment 4. The thrust arm segments of an articulated arm may be arranged concentrically.

A hydraulic main cylinder 21 is arranged to enable a rotation of the main arm segment 3 relative to the crane column 2. The main arm segment 3 is pivotably attached to the crane column 2. A hydraulic articulation cylinder 22 is provided to enable a rotation of articulated arm segment 4 relative to the main arm segment 3. In this example of a lifting device 1, the tip 14 of the lifting device 1 can be formed by the tip of the thrust arm segment 5. The hydraulic cylinders provide a force to move segments of the crane arm relative to each other.

Additionally, the lifting device 1 comprises an apparatus 100 for controlling a movement of the lifting device 1 as described above or below.

The crane arm of the lifting device 1 is mounted to a base 20 (e.g. also called crane base). The crane column 2 is rotatably connected on the base 20. The base 20 may form a mounting platform for the crane arm and may allow to mount the crane arm to a lifting device carrier.

The lifting device 1 may comprise or may be mountable to a lifting device carrier. For example, the lifting device carrier is a device capable of receiving, holding and supporting a lifting device. The lifting device carrier may be a stationary (e.g. non-moving or non-movable) lifting device carrier such as a stationary mounting socket (e.g. platform or structure) or a mobile lifting device carrier such as a vehicle. The vehicle may be a land vehicle (e.g., wheeled, tracked or railed, for example, a truck, a lorry or a crawler) or a watercraft (e.g., a ship, a boat or a barge).

Additionally, the lifting device 1 may comprise a stabilizer system 9 including outriggers and stabilizer legs or the stabilizer system 9 may be connected or connectable to the lifting device 1 or to a vehicle carrying the lifting device 1.

More details and aspects are mentioned in connection with the examples described above or below. The example shown in Fig. 3 may comprise one or more optional additional features corresponding to one or more aspects mentioned in connection with the proposed concept or one or more examples described above or below.

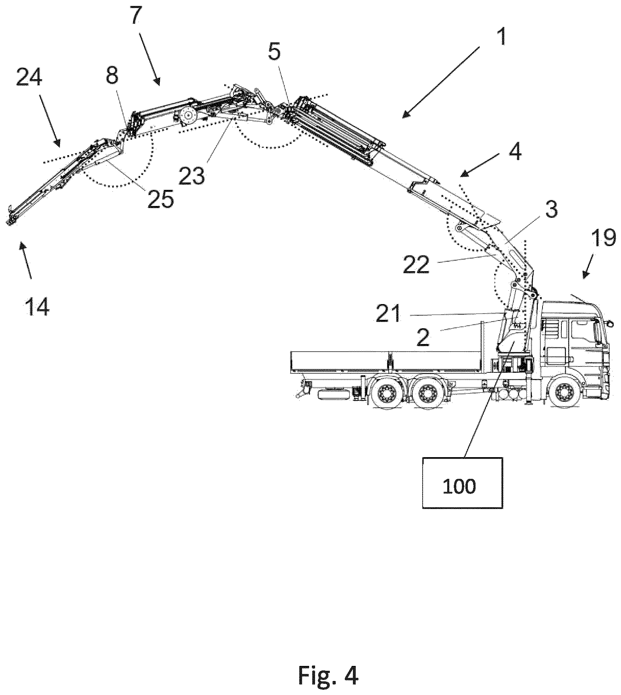

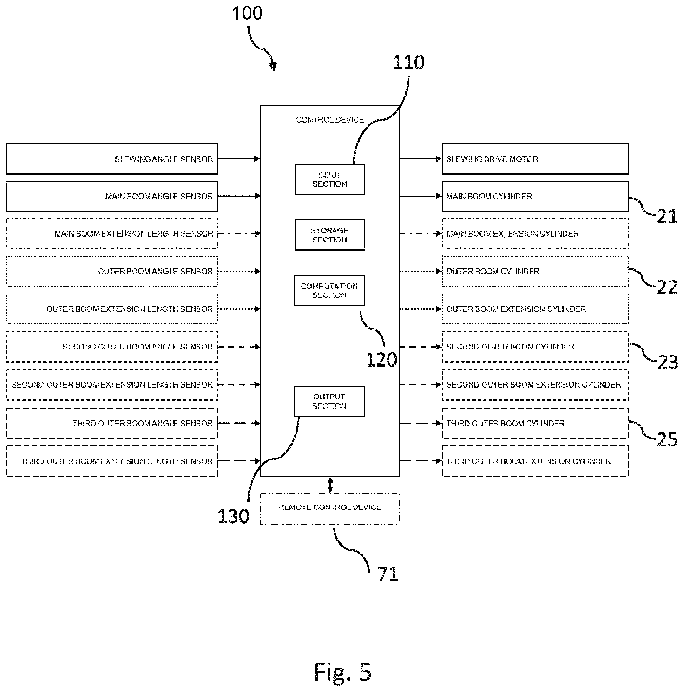

Fig. 4 shows an example of a lifting device 1 mounted on a vehicle 19 (e.g. a truck, a train, a crawler or a boat). The lifting device 1 is implemented as a knuckle boom crane and is arranged on a vehicle 19. In addition to the lifting device of Fig. 5, the lifting device of Fig. 6 comprises a second articulated arm segment 7 (e.g. also called second outer boom, first fly jib or attachment arm). The second articulated arm segment 7 is pivotable about a third horizontal pivot axis. The second articulated arm segment 7 is connected to the thrust arm segment 5 of the first articulated arm segment 4. The second articulated arm segment 7 comprises at least one second thrust arm segment 8 for changing a length of the second articulated arm segment 7. A second articulation cylinder 23 is provided for pivoting the second articulated arm segment 7 relative to the first articulated arm segment 4.

Optionally, the lifting device comprises a third articulated arm segment 24 (e.g. also called third outer boom, second fly jib or attachment arm) connected to the second thrust arm segment 8 of the second articulated arm segment 7. The third articulated arm segment 24 is pivotable about a fourth horizontal pivot axis. The third articulated arm segment 24 may comprise at least one third thrust arm for changing a length of the third articulated arm segment 24. A third articulation cylinder 25 is provided for pivoting the third articulated arm segment 24 relative to the second articulated arm segment 7. In this example of a lifting device 1, the lifting device tip 14 is formed by the tip of the third articulated arm segment 24.

A crane arm of a lifting device 1 may also comprise less than three articulated arm segments (e.g. one as shown in Fig. 3) or more articulated arm segments.

More details and aspects are mentioned in connection with the examples described above or below. The example shown in Fig. 6 may comprise one or more optional additional features corresponding to one or more aspects mentioned in connection with the proposed concept or one or more examples described above or below.

Fig. 5 shows a block diagram of an apparatus 100 for controlling a movement of a lifting device. The apparatus 100 comprises at least one input interface 110 (e.g. also called input section) for receiving signals from sensors, a control panel and/or a remote control 71 through a wireless or wired connection. For example, the apparatus 100 may comprise a single universal input interface or various different input interfaces (e.g. a wireless input interface to be connected to a remote control and wired input interfaces for different sensors) for different data sources.

The apparatus 100 comprises at least one output interface 120 (e.g. also called output section) for transmitting signals to actuators, drivers, controllers of actuators, a control panel and/or a remote control through a wireless or wired connection. For example, the apparatus 100 may comprise a single universal output interface or various different output interfaces (e.g. a wireless output interface to be connected to a remote control and wired output interfaces for different actuators or drivers or controllers of actuators) for different connected electronic components.

A wireless input or output interface may comprise an antenna connected to a transceiver and a wired input or output interface may comprise a connector or pin to be connected to a data source or electronic component.

The apparatus 100 comprises processing circuitry 120 (e.g. also called computation section or one or more processors) configured to process input signals and/or information contained by the input signals and/or determine or calculate parameters and/or generate or trigger output signals and/or output information, for example.

For example, the processing circuitry 120 may be a single dedicated processor, a single shared processor, or a plurality of individual processors, some of which or all of which may be shared, a microcontroller, a central processing unit (CPU), a digital signal processor (DSP) hardware, an application specific integrated circuit (ASIC), a system-on-a-chip (SOC) or a field programmable gate array (FPGA). The processing circuitry 120 may optionally be coupled to, e.g., memory such as read only memory (ROM) for storing software, random access memory (RAM) and/or non-volatile memory. For example, the apparatus 100 may comprise memory (e.g. also called one or more storage devices or storage section) configured to store instructions, which when executed by the processing circuitry 120, cause the processing circuitry 120 to perform a method or a step of a method described herein.

Several sensors or other data sources can be connected to the at least one output interface 120. For example, a slewing angle sensor (e.g. configured to measure the slewing of the crane column), a main boom angle sensor (e.g. configured to measure an angle of the main boom cylinder), a main boom extension length sensor (e.g. configured to measure an extension of a main boom extension cylinder), an outer boom angle sensor (e.g. configured to measure an angle of the outer boom cylinder), an outer boom extension length sensor (e.g. configured to measure an extension of the outer boom extension cylinder), a second outer boom angle sensor (e.g. configured to measure an angle of the second outer boom cylinder), a second outer boom extension length sensor (e.g. configured to measure an extension of the second outer boom extension cylinder), a third outer boom angle sensor (e.g. configured to measure an angle of the third outer boom cylinder) and/or a third outer boom extension length sensor (e.g. configured to measure an extension of the third outer boom extension cylinder).

In one example, the first connector box (labeled as Connector Box 200) can be linked to a variety of data sources, actuators, and sensors. These include an emergency stop, an inclination switch, oil temperature and oil level sensors, and Human Machine Interface (HMI) terminals. It also handles a Pulse Width Modulation (PWM) signal used to control the stabilizer valve, lighting controls for the operator stand and the stabilizer support cylinder, as well as a stabilizer intelligence module (abbreviated as S-IQ module). Additional components connected to this box include Controller Area Network digital input/output (CAN-DI-OUT) modules, an input/output (I/O) module for the crane base, an RRC receiver, and a customer interface plug. Furthermore, it offers several plug interfaces designed for additional stabilizers, custom valve functions, a slip ring transmitter, and an extra distribution box.

The sensors and actuators connected to this first connector box are typically situated on the side of the slip ring transmitter that is positioned in the crane base. In an endlessly slewing crane-one that can rotate continuously without twisting its cables-the sensors on one side of the slip ring transmitter are connected to Connector Box 200, while those on the opposite side are linked to the second connector box.

The second connector box (referred to as Connector Box 300) is designed to connect to devices such as sensors monitoring the transport position of the outer and main booms, an operator terminal, and angle sensors. It also supports pressure switches, the lighting displaying the manufacturer's logo, an optical load indicator, and hydraulic valve sensors along with their corresponding signals. Additional components include warning horns, a telematic module, an I/O module for the knuckle boom, and a slewing winch. Like the first box, this connector box offers plug interfaces for connecting a micro controller unit, the slip ring transmitter, and another distribution box.

Both connector boxes feature attachment interfaces that allow them to be mounted to parts of the crane. For example, Connector Box 200 can be attached to the crane base, while Connector Box 300 can also be secured to the crane base-this is particularly applicable in non-endlessly slewing cranes. In endlessly slewing cranes, however, one configuration may involve attaching Connector Box 200 to the crane column and Connector Box 300 to the crane base, ensuring that the sensors on each side of the slip ring transmitter are properly connected.

Overall, this modular system distributes sensors and actuators across two separate connector boxes, simplifying wiring and signal management. This design not only enhances flexibility and scalability but also improves the reliability of the various control modules essential for the crane's operation.

Additionally, a remote-control device 71 can be wirelessly or wired connected to the apparatus 100.

The apparatus 100 may be a control device (e.g. a central electronic hardware module or a system of connected electronic hardware modules) for the lifting device.

More details and aspects are mentioned in connection with the examples described above or below. The example shown in Figs. 7 may comprise one or more optional additional features corresponding to one or more aspects mentioned in connection with the proposed concept or one or more examples described above or below.

The aspects and features described in relation to a particular one of the previous examples may also be combined with one or more of the further examples to replace an identical or similar feature of that further example or to additionally introduce the features into the further example.

In the following, some examples of the proposed concept are presented:
An example (e.g., example 1) relates to a wiring system for a platform mountable lifting device, comprising a first connector box comprising multiple periphery connectors to attach components relating to the lifting device, a second connector box comprising multiple periphery connectors to attach components relating to the platform, and an interconnect between the first connector box and the second connector box.

Another example (e.g., example 2) relates to a previous example (e.g., example 1) or to any other example, further comprising that the interconnect comprises a slip ring assembly to transfer signals between the first connector box and the second connector box or a cable between the first connector box and the second connector box.

Another example (e.g., example 3) relates to a previous example (e.g., one of the examples 1 or 2) or to any other example, further comprising that the first connector box comprises a first universal connector to connect to the second connector box, and wherein the second connector box comprises a second universal connector to connect to the first connector box.

Another example (e.g., example 4) relates to a previous example (e.g., example 3) or to any other example, further comprising that signal pins of the first universal connector are routed to signal pins of the periphery connectors within the first connector box.

Another example (e.g., example 5) relates to a previous example (e.g., one of the examples 3 or 4) or to any other example, further comprising that signal pins of the second universal connector are routed to signal pins of the periphery connectors within the second connector box.

Another example (e.g., example 6) relates to a previous example (e.g., one of the examples 1 to 5) or to any other example, further comprising that periphery connectors of the first connector box have mutually different shapes, are marked with different symbols or with different colors or that periphery connectors of the second connector box have mutually different shapes, are marked with different symbols or with different colors.

Another example (e.g., example 7) relates to a previous example (e.g., one of the examples 1 to 6) or to any other example, further comprising that the components comprise at least one of an actor or a sensor.

Another example (e.g., example 8) relates to a previous example (e.g., one of the examples 1 to 7) or to any other example, further comprising a third connector box coupled to the first connector box or the second connector box and to a Control Unit.

An example (e.g., example 9) relates to a lifting device mounted on a platform, comprising a wiring system according to any one of examples 1 to 8, components connected to the first connector box, and a platform comprising components connected to the second connector box.

Another example (e.g., example 10) relates to a previous example (e.g., example 9) or to any other example, further comprising that the platform is a truck.

An example (e.g., example 11) relates to a connector box for a wiring system for a lifting device, comprising multiple periphery connectors to attach components relating to a lifting device or to a platform for the lifting device, and a universal connector to connect to a further connector box, wherein signal pins of the universal connector are routed to signal pins of the periphery connectors within the connector box.

Another example (e.g., example 12) relates to a previous example (e.g., example 11) or to any other example, further comprising that the periphery connectors of the connector box have mutually different shapes, are marked with different symbols or with different colors.

Another example (e.g., example 13) relates to a previous example (e.g., one of the examples 11 or 12) or to any other example, further comprising an extension connector for a further connector by, the extension connector configured to provide at least power for the further connector box.

Another example (e.g., example 14) relates to a previous example (e.g., one of the examples 11 to 13) or to any other example, further comprising at least one of a fuse, a backup battery, a diagnosis port or a jumper.

Another example (e.g., example 15) relates to a previous example (e.g., one of the examples 11 to 14) or to any other example, further comprising a connector to connect to a mobile platform.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A wiring system (150) for a platform mountable lifting device, comprising:
a first connector box (200) comprising multiple periphery connectors (202a-p) to attach components relating to the lifting device;
a second connector box (300) comprising multiple periphery connectors (302a-o) to attach components relating to the platform; and
an interconnect (400) between the first connector box (200) and the second connector box (300).

2. The wiring system (150) of claim 1, wherein the interconnect (400) comprises a slip ring assembly to transfer signals between the first connector box (200) and the second connector box (300) or a cable between the first connector box (200) and the second connector box (300).

3. The wiring system (150) of claim 1 or 2, wherein the first connector box (200) comprises a first universal connector (210) to connect to the second connector box (300), and wherein the second connector (300) box comprises a second universal connector (310) to connect to the first connector box (200).

4. The wiring system (150) of claim 3, wherein signal pins of the first universal connector (210) are routed to signal pins of the periphery connectors (202a-p) within the first connector box (200).

5. The wiring system (150) of claim 3 or 4, wherein signal pins of the second universal connector (310) are routed to signal pins of the periphery connectors (302a-o) within the second connector box (300).

6. The wiring system (150) of any one of the preceding claims, wherein periphery connectors (202a-p) of the first connector box (200) have mutually different shapes, are marked with different symbols or with different colors or the periphery connectors (302a-o) of the second connector box (300) have mutually different shapes, are marked with different symbols or with different colors.

7. The wiring system (150) of any one of the preceding claims, wherein the components comprise at least one of an actor or a sensor.

8. The wiring system (150) of any one of the preceding claims, further comprising a third connector box coupled to the first connector box or the second connector box and to a Control Unit.

9. A lifting device (1) mounted on a platform (19), comprising:
a wiring system (150) according to any one of claims 1 to 8;
components connected to the first connector box (200); and
a platform (19) comprising components connected to the second connector box (300).

10. The lifting device (1) of claim 9, wherein the platform is a truck (19).

11. A connector box (200, 300) for a wiring system for a lifting device, comprising:
multiple periphery connectors (202a-p, 302a-o) to attach components relating to a lifting device or to a platform for the lifting device; and
a universal connector (210, 310) to connect to a further connector box, wherein signal pins of the universal connector (210, 310) are routed to signal pins of the periphery connectors within the connector box (200, 300).

12. The connector box (200, 300) of claim 11, wherein the periphery connectors (202a-p, 302a-o) of the connector box have mutually different shapes, are marked with different symbols or with different colors.

13. The connector box (200, 300) of claim 11 or 12, further comprising, an extension connector (210, 310) for a further connector by, the extension connector (210, 310) configured to provide at least power for the further connector box.

14. The connector box (200, 300) of any one of claims 11 to 13, further comprising at least one of a fuse (332a, 332b), a backup battery, a diagnosis port, or a jumper.

15. The connector box (200, 300) of any one of claims 11 to 14, further comprising a connector to connect to a mobile platform.

## Amended claims

### Amended claims in accordance with Rule 137(2) EPC.

1. A lifting device (1) mounted on a platform (19), comprising a wiring system (150) for a platform mountable lifting device, comprising:
a first connector box (200) at the lifting device, comprising multiple periphery connectors (202a-p) having attached components relating to the lifting device which comprise at least an angle sensor;
a second connector box (300) at the platform, comprising multiple periphery connectors (302a-o) having attached components relating to the platform which comprise at least a stabilizer intelligence module; and
an interconnect (400) between the first connector box (200) and the second connector box (300).

2. The lifting device) of claim 1, wherein the interconnect (400) comprises a slip ring assembly to transfer signals between the first connector box (200) and the second connector box (300) or a cable between the first connector box (200) and the second connector box (300).

3. The lifting device (150) of claim 1 or 2, wherein the first connector box (200) comprises a first universal connector (210) to connect to the second connector box (300), and wherein the second connector (300) box comprises a second universal connector (310) to connect to the first connector box (200).

4. The lifting device (150) of claim 3, wherein signal pins of the first universal connector (210) are routed to signal pins of the periphery connectors (202a-p) within the first connector box (200).

5. The lifting device (150) of claim 3 or 4, wherein signal pins of the second universal connector (310) are routed to signal pins of the periphery connectors (302a-o) within the second connector box (300).

6. The lifting device (150) of any one of the preceding claims, wherein periphery connectors (202a-p) of the first connector box (200) have mutually different shapes, are marked with different symbols or with different colors or the periphery connectors (302a-o) of the second connector box (300) have mutually different shapes, are marked with different symbols or with different colors.

7. The lifting device (150) of any one of the preceding claims, wherein the components comprise at least one of an actor or a sensor.

8. The lifting device (150) of any one of the preceding claims, further comprising a third connector box coupled to the first connector box or the second connector box and to a Control Unit.

9. The lifting device (1) of any one of the preceding claims, wherein the platform is a truck (19).

10. The lifting device (1) ) of any one of the preceding claims, wherein the first connector box or the second connector box further comprises at least one of a fuse (332a, 332b), a backup battery, a diagnosis port, or a jumper.

11. The lifting device (1) ) of any one of the preceding claims, wherein the first connector box or the second connector box further comprises a connector to connect to a mobile platform.
